# EUROPÄISCHE PATENTSCHRIFT

(11) **EP 0 335 094 B1**
(45) Veröffentlichungstag und Bekanntmachung des Hinweises auf die Patenterteilung: **07.01.1993**
(21) Anmeldenummer: 89102670.0
(22) Anmeldetag: 16.02.1989
(51) Int. Cl.: F02D 41/30, F02M 59/44

(54) **Verfahren zur Einstellung eines Weggebers**
Apparatus for the calibration of a position sensor
Dispositif de calibrage d'un capteur de position

(30) Priorität: 30.03.1988 DE 3810853
(43) Veröffentlichungstag der Anmeldung: 04.10.1989
(73) Patentinhaber: ROBERT BOSCH GMBH, 70442 Stuttgart (DE)
(72) Erfinder: Nothdurft, Heinz, D-7000 Stuttgart 70 (DE); Rüsseler, Karl-Friedrich, D-7257 Ditzingen 3 (DE); Braun, Wolfgang, D-7257 Ditzingen (DE); von Hülsen, Wolfram, D-7400 Tübingen (DE)

(56) Entgegenhaltungen:
- DE-A- 3 148 687
- FR-A- 2 202 538
- GB-A- 2 049 946
- GB-A- 2 065 793
- GB-A- 2 136 060
- PATENT ABSTRACTS OF JAPAN, Band 10, Nr. 130 (M-478)[2187], 14. Mai 1986;& JP-A-60 256 556 (NIHON DENSHI K.K.K.) 18-12-1985

## Beschreibung

### Stand der Technik

Die Erfindung geht aus von einem Verfahren nach der GB-A-2 049 946.

Es ist aus der GB-A-2 049 946 ein Verfahren zur Einstellung eines Weggebers 28 bekannt, bei der der Weggeber entsprechend den Stellungen eines Kraftstoffeinspritzmengen bei einer Kraftstoff-Versorgungseinrichtung von Brennkraftmaschinen steuernden Stellteils 16 Steuersignale an eine elektrische Steuereinrichtung 24 abgibt, wobei mindestens zwei Betriebspunkte der Kraftstoffeinspritzpumpe angefahren werden, wobei elektrische Stellsignale entsprechend diesen Betriebspunkten, die aus der Versorgungsspannung abgeleitet werden, vom Weggeber 28 abgenommen werden, die Stellsignale mit einem vorgegebenen Sollsignal verglichen werden, und, entsprechend der jeweiligen Signalabweichung, in der Kraftstoff-Einspritzmengensteuereinrichtung die Grundeinstellung des Weggebers durch die Änderung des Verstärkungsfaktors eines Verstärkers korrigiert wird. Dabei ist von Nachteil, daß der Einstellung des Weggebers keine mechanische Maßverkörperung zugrunde liegt und die Einstellung des Weggebers nicht an einer stillstehenden Kraftstoffeinspritzpumpe erfolgt.

### Vorteile der Erfindung

Das erfindungsgemäße Verfahren mit den Merkmalen des Anspruchs 1 hat demgegenüber den Vorteil, daß die Einstellung des Weggebers an einer voreingestellten und stillstehenden Kraftstoffeinspritzpumpe erfolgen kann, wobei die Voreinstellung durch markierte Lagen des Stellteils reproduzierbar ist.

Das erfindungsgemäße Verfahren mit den Merkmalen des Anspruchs 3 hat demgegenüber den Vorteil, daß durch zusätzliche Anschläge, die mit einer Distanzlehre eingestellt werden, Betriebspunkte im Kennfeld der Kraftstoffeinspritzpumpe markiert werden, die ein Lastsignal mit einer, bei allen Pumpen gleichbleibenden genauen Mengenzuordnung verkörpern. Die dazu notwendige Anpassung der Kennlinie des Weggebers erfolgt in einem Regelkreis weitgehend ohne mechanische Hilfsmittel und verbessert so die Reproduzierbarkeit der Kennlinienwerte und damit die Mengenzuordnung.

Die Abgleichswiderstände sind im ortsfesten Teil des Weggebers so eingebaut, daß sie durch eine verschließbare Öffnung gut zugänglich sind. Die durch das partielle Abbrennen der Widerstandsbahn durch Laserstrahl erzielten Widerstandswerte sind stabil fixiert und bilden eine mechanische Maßverkörperung.

Diese Art des Abgleichs ist gut automatisierbar; es können auch mehrere Abgleichszyklen durchlaufen werden, bis eine vorgegebene Genauigkeitsschranke unterschritten wird. Die Gefahr einer subjektiven Einstellung, verbunden mit der Einstellspielhysterese mechanischer Einstellglieder besteht nicht mehr.

### Zeichnung

Die Erfindung ist in der Zeichnung anhand mehrerer Figuren dargestellt und in der nachfolgenden Beschreibung näher erläutert. Es zeigen Figur 1 eine schematische Anordnungsdarstellung, Figur 2 das Schaltbild des Potentiometers am beweglichen Geberteil und Figur 3 das Abgleichverfahren anhand eines Blockdiagramms.

### Beschreibung der Ausführungsbeispiele

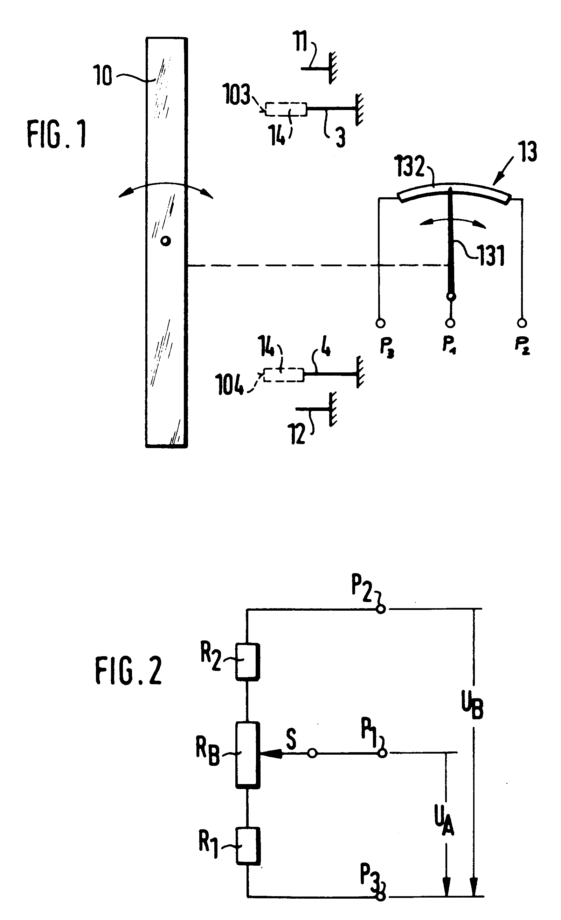

Figur 1 zeigt in der Seitenansicht eine Kraftstoffeinspritzpumpe der Verteilerbauart mit einem die Kraftstoffeinspritzmenge steuernden Stellteils 10 in Form eines Verstellhebels 10, der in bekannter Weise in den Regler der Kraftstoffeinspritzpumpe eingreift und z. B. eine Regelfedervorspannung willkürlich steuert. Dieser Verstellhebel 10 ist schwenkbar zwischen zwei ortsfesten, einstellbaren Anschlägen, dem Anschlag 11 für den Betriebspunkt Vollast und den Anschlag 12 für den Betriebspunkt Leerlauf. Die Bewegung des Verstellhebels 10 wird übertragen auf ein mit der Kraftstoffeinspritzpumpe gekoppelten Weggeber 13. Der Weggeber 13 kann nach unterschiedlichen Prinzipien arbeiten, beispielsweise kann er als Induktiv-, Kapazitiv- oder Widerstandsgeber ausgebildet sein. In der nachfolgenden Beschreibung wird von einem Widerstandsgeber ausgegangen, und zwar, da die Bewegung des Verstellhebels hier als Drehbewegung vorliegt, in Form eines Drehpotentiometers 13. Das Drehpotentiometer 13 ist an der Kraftstoffeinspritzpumpe mit Hilfe lösbarer Befestigungselemente verdrehbar befestigt. Dies erlaubt eine Voreinstellung in bezug auf die Drehlage des Verstellhebels und ein Ausgleich von Teiletoleranzen.

An der Kraftstoffeinspritzpumpe sind neben den Anschlägen 11 und 12 zwei zusätzliche Anschläge 3 und 4 ortsfest und einstellbar angebracht, und zwar, bezogen auf den Verstellhebel 10, entweder neben der Schwenkebene im Schwenkbereich, oder, wie noch näher beschrieben, in der Schwenkebene außerhalb des Schwenkbereichs. Die Anschläge 3 und 4 können sowohl auf das Potentiometer 13 als auch auf den Verstellhebel 10 zur Wirkung gebracht werden; sie werden mit Hilfsmitteln, im vorliegenden Fall mittels einer Distanzlehre 14 angefahren, die, auf die außerhalb des Schwenkbereichs liegenden Anschläge 3 und 4 gesetzt, bewirkt, daß die um die Distanzlehre 14 verlängerten Anschläge 3 und 4 vorübergehend, während des Aufsetzvorgangs, in den Schwenkbereich des Verstellhebels 10 gelangen und hier die Transformationsanschläge 103 und 104 bilden. Dadurch sind zwei Lagen und damit zwei Betriebspunkte im Kraftstoffpumpenkennfeld Einspritzmenge über Drehzahl, kurz Reglerkennfeld, markiert. Durch die Kopplung des Verstellhebels 10 mit dem beweglichen Teil 131 des Weggebers 13, dargestellt durch die Achse und den Schleifer S des Potentiometers 13, ist dieser Schleifer S je nach Übersetzung der Kopplung um einen gleichen oder geänderten Winkelbetrag, der durch die beiden Transformationsanschläge 103 und 104 vorgegeben wird, auf einer Widerstandsbahn R_{B} drehbar. Die Widerstandsbahn R_{B}, zwei Abgleichwiderstände R₁ und R₂ und das Potentiometergehäuse bilden den feststehenden Teil 132 des Weggebers 13. Die Widerstandsbahn R_{B} ist entsprechend Figur 2 in einer Reihenschaltung symmetrisch mit den Abgleichwiderständen R₁ und R₂ verbunden. Die von R_{B} abgewandten Enden der Abgleichwiderstände bilden Anschlußpunkte, und zwar bei R₁ den Punkt P₃ und bei R₂ den Punkt P₂. Der auf R_{B} gleitende Schleifer S des beweglichen Teils 131 des Weggebers 13 hat an seinem, der Widerstandsbahn R_{B} abgewandten Ende den Anschlußpunkt P₁. Zwischen den Anschlußpunkten P₂ und P₃ ist die Betriebsspannung U_{B}, gleichbedeutend mit der Versorgungsspannung U_{V}, angelegt. Je nach Stellung des Schleifers S auf der Widerstandsbahn R_{B} kann zwischen den Anschlußpunkten P₁ und P₃ eine unterschiedlich große Ausgangs spannung U_{A} abgenommen werden. Sie repräsentiert im Reglerkennfeld der Kraftstoffeinspritzpumpe für jede Drehzahl eine bestimmte Kraftstoffmenge. Die Zuordnung für Drehwinkel am Potentiometer 13 zur Kraftstoffmenge ist innerhalb des Bereiches zwischen den beiden Transformationsanschlägen 103 und 104 vom Pumpenexemplar abhängig. Diese Abhängigkeit wird durch das Verfahren zur Einstellung des Weggebers 13, kurz Abgleichverfahren, beseitigt.

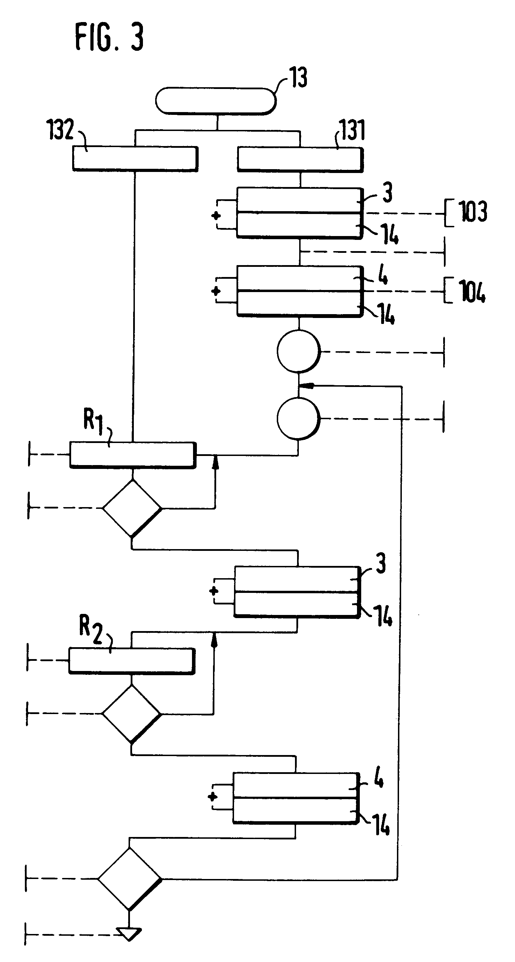

Figur 3 zeigt in einem Blockdiagramm schematisch Elemente des Abgleichverfahrens. Ausgehend von einer betriebenen Kraftstoffeinspritzpumpe, die auf einem Betriebsprüfstand montiert ist, werden die Anschläge 3 und 4 durch das Aufsetzen der Distanzlehre 14 verlängert. Es entstehen somit die Transformationsanschläge 103 und 104. Diese werden nacheinander von dem Verstellhebel 10 angefahren und die Anschläge 3 und 4 dabei so eingestellt, daß bei Anlage des Verstellhebels 10 am Transformationsanschlag 103 ein vorgegebener Bezugspunkt im Reglerkennfeld nahe des Vollastbereichs und bei Anlage des Verstellhebels 10 am Transformationsanschlag 104 ein vorgegebener Bezugspunkt im Reglerkennfeld im unteren Teillastbereich erreicht wird. Die Anschläge 3 und 4 werden fixiert und bilden somit mittelbar die Markierung für den Verstellhebel 10. Nach Vormontierung des Potentiometers 13 an die Kraftstoffeinspritzpumpe und elektrischer Kontaktierung des Potentiometers 13 ist die Kraftstoffeinspritzpumpe voreingestellt im Sinne des folgenden Abgleichverfahrens entsprechend Figur 3, welches auf einem Meßprüfstand bei stillstehender Kraftstoffeinspritzpumpe vorgenommen wird.

Der Verstellhebel 10 wird in eine markierte Stellung gefahren, in Figur 3 an den Transformationsanschlag 103. Durch Drehung des Gehäuses des Potentiometers 13 und damit der Widerstandsbahn R_{B} wird der mit dem Verstellhebel 10 gekoppelte Schleifer S auf R_{B} verschoben, bis eine vorgegebene Spannung U₁ als Ausgangsspannung U_{A} zwischen den Anschlußpunkten P₁ und P₃ erreicht wird. In dieser Position wird das Gehäuse des Potentiometers 13 bleibend fixiert, die Grundeinstellung des Potentiometers 13 somit abgeschlossen. Danach wird zwischen den Anschlußpunkten P₁ und P₃ die Ist-Spannung U₃ gemessen.

In der Folge wird der Stellhebel 10 in die zweite markierte Stellung gedreht, in Figur 3 an den Transformationsanschlag 104. Der Schleifer S folgt dieser Drehung auf der nun ortsfesten Widerstandsbahn R_{B}. Somit ist zwischen P₁ und P₃ als elektrisches Stellsignal die Istspannung U₄ abnehmbar. Beide elektrischen Stellsignale in Form der Istspannungen U₃ und U₄ werden mit vorgegebenen Sollsignalen in Form von Sollspannungen U₃* und U₄* verglichen, die Signalabweichungen festgestellt und daraus Korrekturwerte berechnet. Diese Korrekturwerte werden umgesetzt mittels Lasertrimmen, d. h. von einem Lasergerät, dessen Strahl Partien der Abgleichwiderstände R₁ und R₂ abbrennt, und so deren Widerstandswerte in dem vorberechneten Umfang ändert.

Das Abgleichverfahren ist abgeschlossen, wenn nach diesem ersten Abgleichzyklus nach Anfahren des Stellhebels 10 an die Transformationsanschläge 103 und 104 die Abweichungen der Istspannungen U₃ und U₄ zu den sollspannungen U₃* und U₄* innerhalb eines vorgegebenen Toleranzbereichs liegen. Wird dies noch nicht erreicht, so wird ein weiterer Abgleichzyklus begonnen. Ist das Abgleichverfahren abgeschlossen, so wird die Distanzlehre 14 entfernt, mit einer Abdeckkappe die Abgleichöffnung am Potentiometer 13 verschlossen und damit das Abgleichergebnis verändernde Einflüsse von der Widerstandsschaltung im Potentiometer 13 ferngehalten.

Nunmehr steht zwischen den durch die Transformationsanschläge 103 und 104 zuvor definierten Lagen an den Anschlußpunkten P₁ und P₃ Normsteuerspannungen zur Verfügung, die auf einer vorgegebenen Kurve liegen. Mit dieser Normsteuerspannung, die dank des Abgleichverfahrens eine gleichbleibende, genaue Mengenzuordnung verkörpert, ist es möglich, beispielsweise Automatgetriebe, Abgasrückführventile oder mechanische Lader so anzusteuern, daß einerseits die heutigen hohen Genauigkeitsanforderungen konstant von Pumpe zu Pumpe erfüllt werden können und dieses Verfahren an einer stillstehenden Kraftstoffeinspritzpumpe in einer wirtschaftlich durchzuführenden Fertigung erreicht wird.

## Patentansprüche

1. Verfahren zur Einstellung eines Weggebers (13), der entsprechend den Stellungen eines Kraftstoffeinspritzmengen bei einer Kraftstoffversorgungseinrichtung von Brennkraftmaschinen steuernden Stellteils (10) Steuersignale an eine elektrische Steuereinrichtung abgibt, wobei mindestens zwei Betriebspunkte im Kraftstoffeinspritzpumpenkennfeld, Einspritzmengen über Drehzahl, auf einem Meßprüfstand angefahren werden, entsprechend diesen Betriebspunkten Stellungen des Stellteils (10) markiert werden, danach der Weggeber (13) bei nun stillstehender Kraftstoffeinspritzpumpe mit dieser gekoppelt und ein bewegliches Teil (131) des Weggebers (13) mit dem Stellteil (10) verbunden wird, das Stellteil (10) in die markierte Stellungen gebracht wird, dort jeweils elektrische Stellsignale, die aus der Versorgungsspannung abgeleitet werden, vom Weggeber (13) abgenommen werden, die Stellsignale mit für die beiden Betriebspunkte vorgegebenen Sollsignalen verglichen werden und entsprechend der jeweiligen Signalabweichung die Grundeinstellung des Weggebers (13) korrigiert wird.

2. Verfahren nach Anspruch 1, dadurch gekennzeichnet, daß als Weggeber (13) ein Potentiometer (13) und zur Änderung der Grundeinstellung ein eingangsseitiger und/oder ein ausgangsseitiger Widerstand verändert wird.

3. Verfahren nach Anspruch 1 oder 2 zur Einstellung eines Weggebers bei einer Kraftstoffeinspritzpumpe, bei der in oder neben der Schwenkebene des beweglichen Teils (131) des Weggebers (13) oder des Stellteils (10) wenigstens zwei zusätzliche einstellbare Anschläge (3, 4) vorgesehen werden, die auf dem beweglichen Teil (131) des Weggebers (13) oder das Stellteil (10) in den Schwenkbereich oder die Schwenkebene mittels einer Distanzlehre (14) übertragen werden und die Betriebspunkte markieren.

4. Verfahren nach Anspruch 3, dadurch gekennzeichnet, daß als Weggeber (13) ein Potentiometer (13) verändert wird und zur Änderung der Grundeinstellung des Weggebers (13) in einem feststehenden Teil (132) des Weggebers (13) eingebaute Abgleichwiderstände verändert werden.

5. Verfahren nach Anspruch 4, dadurch gekennzeichnet, daß die Abgleichwiderstände durch Lasertrimmen verändert werden.

6. Verfahren nach Anspruch 3 bis 5, dadurch gekennzeichnet, daß eine über den Abgleichwiderständen am Potentiometer vorhandene Abgleichöffnung verschließbar ist.

## Claims

1. Method for adjusting a displacement signal generator (13) which emits control signals to an electrical control device in accordance with the positions of an operating element (10) controlling fuel injection quantities in a fuel supply device of internal combustion engines, whereby the fuel injection pump is driven on a measurement test stand to at least two operating points on its characteristic diagram of injection quantities against rotational speed, positions on the operating element (10) are marked corresponding to these operating points, the displacement signal generator (13) is subsequently coupled to the fuel injection pump with the latter at rest and a movable part (131) of the displacement signal generator (13) is connected to the operating element (10), the operating element (10) is brought into the marked positions, electrical operating signals derived from the supply voltage are taken from the displacement signal generator (13) at each of these positions, the operating signals are compared with required signals specified for the two operating points and the basic adjustment of the displacement signal generator (13) is corrected corresponding to the respective signal deviation.

2. Method according to Claim 1, characterised in that a potentiometer (13) is used as the displacement signal generator (13) and an input-side and/or an output-side resistor is modified to change the basic adjustment.

3. Method according to Claim 1 or 2 for adjusting a displacement signal generator for a fuel injection pump, in which at least two additional adjustable stops (3, 4) are provided in or near the pivoting plane of the moving part (131) of the displacement signal generator (13) or of the operating element (10), which stops are transferred on (sic) the moving part (131) of the displacement signal generator (13) or to the operating element (10) into the pivoting range or the pivoting plane by means of a distance gauge (14) and mark the operating points.

4. Method according to Claim 3, characterised in that a potentiometer (13), as the displacement signal generator (13), is modified and compensating resistors installed in a fixed part (132) of the displacement signal generator (13) are modified to change the basic adjustment of the displacement signal generator (13).

5. Method according to Claim 4, characterised in that the compensating resistors are modified by laser trimming.

6. Method according to Claims 3 to 5, characterised in that a compensating opening, present above the compensating resistors on the potentiometer, can be closed.

## Revendications

1. Procédé de calibrage d'un capteur de position (13) qui émet à une installation de commande électrique des signaux de commande correspondant à la position d'une pièce de réglage (10) commandant des quantités d'injection de carburant d'un dispositif d'alimentation en carburant d'un moteur à combustion interne, procédé selon lequel on passe sur au moins deux points de fonctionnement dans le champ caractéristique de la pompe d'injection de carburant correspondant à la quantité injectée en fonction de la vitesse de rotation, sur un banc de contrôle et de mesure, procédé selon lequel on repère selon les points de fonctionnement, les positions de la pièce de réglage (10) et on ne coupe le capteur de position (13) qu'à cette pièce que lorsque la pompe d'injection est à l'arrêt et on relie une pièce mobile (131) du capteur de position (13) à la pièce de réglage (10), on met la pièce de réglage (10) dans les positions repérées et on émet à partir de celle-ci des signaux de position, respectifs dérivés de la tension d'alimentation, signaux détectés par le capteur de position (13), on compare les signaux de réglage aux signaux de consigne prédéterminés pour les deux points de fonctionnement et on corrige le réglage de base du capteur de position (13) suivant la déviation de signal respective.

2. Procédé selon la revendication 1, caractérisé en ce que comme capteur de position (13), on a un potentiomètre (13) et pour modifier le réglage de base, on change une résistance à l'entrée et/ou à la sortie.

3. Procédé selon la revendication 1 ou 2 pour régler un capteur de position d'une pompe d'injection de carburant, selon lequel on prévoit deux butées réglables (3, 4) supplémentaires dans ou à côté du plan de pivotement de la partie mobile (131) du capteur de position (13) ou de la partie de réglage (10), ces butées étant transposées à l'aide d'un gabarit d'écartement (14) sur la partie mobile (131) du capteur de position (13) ou la partie de réglage (10) dans la zone de basculement ou le plan de basculement et ces butées repérant les points de fonctionnement.

4. Procédé selon la revendication 3, caractérisé en ce que comme capteur de position (13), on utilise un potentiomètre (13) et pour modifier le réglage de base du capteur de position (13), on modifie des résistances de calibrage intégrées à une partie fixe (132) du capteur de position (13).

5. Procédé selon la revendication 4, caractérisé en ce que les résistances de calibrage sont modifiées à l'aide de dispositifs à laser.

6. Procédé selon les revendications 3 à 5, caractérisé en ce qu'une ouverture de calibrage existant au-dessus des résistances de calibrage sur le potentiomètre peut être obturée.
